# EUROPEAN PATENT SPECIFICATION

(11) **EP 1 884 308 B1**
(45) Date of publication and mention of the grant of the patent: **28.04.2010**
(21) Application number: 06254098.4
(22) Date of filing: 04.08.2006
(51) Int. Cl.: B23K 20/12, B23K 103/20

(54) **Method of friction stir welding together dissimilar metal members with a double acting rotary tool for filling of the hole created by the probe**
Reibrührschweissverfahren von unterschiedlich metallischen Bauteilen mit einem doppeltwirkenden drehenden Werkzeug zum Füllen des vom Stift erzeugten Loches
Procédé de soudage par friction-malaxage de composants métalliques différents avec un outil tournant à double effet pour remplir le trou créé par la pointe

(43) Date of publication of application: 06.02.2008
(73) Proprietor: SUMITOMO LIGHT METAL INDUSTRIES, LTD., Minato-ku, Tokyo 105-8601 (JP)
(72) Inventor: Kumagai, Masaki, Sumitomo Light Metal Ind., Ltd., Tokyo 105-8601 (JP); Tanaka, Koji, Sumitomo Light Metal Ind., Ltd., Tokyo 105-8601 (JP)
(74) Representative: Murray, Elisabeth Anne

(56) References cited:
- EP-A- 1 674 188
- EP-A2- 1 716 959
- WO-A-01/28732
- JP-A- 2002 192 358
- JP-A- 2006 061 921
- US-A1- 2002 179 682
- US-A1- 2006 102 699

## Description

The present invention relates to a method of joining together dissimilar metal members according to the preamble of claim 1 (see, for example, JP 2006/061 921 A), and particularly to a technique which can improve a soundness of the joint region when plate-like portions of two metal members, which are formed of mutually different materials and have mutually different hardnesses, are joined together.

### Discussion of Related Art

Recently, there are required restriction of generation of harmful gasses and carbon dioxide discharged from an automobile, and also required reduction of fuel expenses, from a point of view of protecting the global environment and saving the energy. Reduction in weight of the automobile is the most effective to meet the requirements, so that there are actively reviewed replacements of steel materials with aluminum materials, as materials to form body parts (members) and other various parts (members), which are components of the automobile. However, it is difficult to replace all the materials to form the body parts and the other parts with aluminum materials. For this reason, when there is used the member formed of the aluminum material, there cannot avoid providing a so-called hybrid joint, i.e., a joint between a member formed of a steel material and the member formed of the aluminum material, which materials are dissimilar metals to each other. Therefore, it has been an important object to join together the dissimilar metal members.

The above-mentioned joint between the dissimilar metal members, such as the member formed of the aluminum material and the member formed of the steel material, is required not only in a field of transports represented by the above-mentioned automobiles, but also in various fields such as that of home electric appliances and building materials. In these fields, there are required strong joints between the member formed of the aluminum material and the member formed of the steel material. In addition, there are also required strong joints between other kinds of dissimilar metal members. For example, there is required a strong joint between a member formed of a soft metal such as a copper and a member formed of a hard metal such as a steel.

Conventionally, there has been a problem in joining together metal members by a generally used melt welding method. Namely, when an aluminum member and an iron member such as a steel member are joined together by the melt welding method, each of the metals is melted, and a brittle intermetallic compound such as Fe₂Al₅ or FeAl₃ is generated at an interface between the members, whereby a joint strength is deteriorated. Therefore, there have been reviewed various methods of joining together dissimilar metal members, which include the followings: mechanical connections such as methods of joining together the members by caulking or by using a rivet or a bolt; and methods of explosion bonding, adhesive bonding, and methods of rotary friction pressure welding. However, each of these methods inherently has problems in terms of an efficiency of the joining operation, a reliability of the joint, a design of the joint, and a cost of the joint, to a greater or lesser extent, which would be a hindrance to put the method to a practical use.

The inventors of the present invention previously proposed, in JP-A-2003-275876, a method of joining together a member formed of an aluminum, which is a soft material, and a member formed of a steel, which is a hard material, by friction stir welding. In the method of friction stir welding, there is involved a relatively small amount of heat generation. In this method, only some portions of the members are plasticized, and the members are joined together with each other under solid phase, without melting of the materials. In detail, members to be joined together, i.e., an aluminum member, which is relatively soft, and a steel member, which is relatively hard, are superposed on each other, in a way that the aluminum member is overlaying on the steel member. Thus superposed members are placed on a backing member formed of a hard material, and the members are restrained on the backing member. A pin-shaped probe formed of a hard material and protruded from a shoulder surface of a rod-shaped rotary tool is inserted into superposed parts of the members, while the rotary tool is rotated on its axis at a high speed. The probe is inserted into the superposed parts, until the shoulder surface comes into contact with a surface of the aluminum member, without allowing a tip of the probe to come into contact with the hard steel member. In this way, there is generated a frictional heat, and a portion of the aluminum member, which is plasticized by the frictional heat, is stirred by the probe, whereby the aluminum member and the steel member are joined together with each other. According to this method, there is revealed that a generation of intermetallic compounds is advantageously restricted or prevented, and strength of a junction (joint strength) to withstand a tensile shear can be advantageously improved.

However, in members (joints) joined together by the method of friction stir welding, a body of a rotary tool, which provides a shoulder surface, and a probe are integrally structured. Accordingly, if the rotary tool is removed after the friction stir welding operation is completed, there is left a hole at the joint region (friction stir zone) corresponding to a part, to which the probe of the rotary tool has been inserted, whereby an opening is made at the joint region. In this case, there are inherent anxieties of causing problems such as a problem of retaining excessive coating material at the bottom of the hole which is a trace of the probe, and further causing corrosion because of the existence of the hole. In detail, the probe of the rotary tool, which is inserted into the superposed parts from the side of the aluminum plate during the friction stir welding operation, causes a stirring action, and a friction stir zone is formed so that the aluminum member and the steel member may be joined together with each other with a sufficient strength at the junction thereof. In this case, oxides, Fe metal components, flakes of a Zn coating, etc., which are existed on the interface between the aluminum member and the steel member, especially on the surface of the steel member, may be exposed on the surface of the bottom of the probe hole, without getting into the friction stir zone. In such a case, there is an anxiety that there may be caused what is called galvanic corrosion (electrical corrosion) or bimetallic corrosion between the above-mentioned components and the aluminum member of the aluminum plate, by an entry of water etc. to the probe hole.

In JP-A-2003-170280, there is also proposed a method of joining together dissimilar metal members by a friction stir welding. In JP-A-2003-170280, a first member having a low melting point and a second member having a high melting point are superposed on each other, and a tip of a probe of a welding jig is inserted into superposed parts from a side of the first member, until the tip of the probe goes through the first member and reaches the second member. In this method, there is generally used a steel material as the material of the probe. For this reason, if this method is applied to join together a member formed of the aluminum material and a member formed of the steel material, there is a problem that the probe would be worn by the member formed of the steel material, so that the lifetime of the jig would be extremely short.

Meanwhile, the inventors of the present invention described, in JP-A-2001-259863, a method of a friction stir spot welding to join together a plurality of superposed members formed of an aluminum material. In this method: an insertion probe, which is provided separately from a main body of a rotary tool, is inserted into the members, while the insertion probe is rotated, whereby the members are subjected to a friction stir welding operation. Subsequently, the insertion probe is removed from thus formed friction stir zone while an insertion hole (probe hole) formed by the removal of the probe is filled by a material flown from another part of the friction stir zone other than a part, from which the insertion probe is removed. However, in JP-A-2001-259863, there is only disclosed the method of friction stir spot welding, in which the plurality of the members formed of the aluminum material are joined together.

Various methods of friction stir welding are also disclosed in JP 2006 061921 A, US 2002/179682 A and JP 2002/192358 A.

### SUMMARY OF THE INVENTION

The present invention has been made in the light of the situations described above. It is therefore an object of some instances the invention to provide a method of joining together dissimilar metal members which can effectively improve soundness of a joint region of the members, by superposing plate-like parts of a plurality of metal members, which are formed of mutually different materials and have mutually different hardnesses, and performing a friction stir welding operation to the superposed parts, without any anxiety of causing galvanic corrosion.

The principle of the present invention is a method of joining together dissimilar metal members as defined in claim 1.

In the method of joining together dissimilar metal members according to the present invention, there is employed or used the double-acting rotary tool as the rotary tool and the probe movable in the axial direction independently from the shoulder member. In this arrangement, after joining together the first and second members by an action of friction stirring under solid phase, the probe is removed, and then the probe hole formed by the removal of the probe can be filled by the material flown from another part of the friction stir zone other than a part, from which the probe is removed. In this way, the probe hole is filled up, so that even if there are existed substances, in particular, oxides of a material of the second member existed on a surface of the second member, metal components of the second member, and/or components for a surface treatment, at an interface between the first and second members, the substances are buried by the material flown from another part of the friction stir zone other than the part, from which the probe is removed, and the substances are not exposed to the exterior of the members. According to this arrangement, even if the first member is come into contact with water, there is not caused any anxiety of composing a battery between the water and the metal components of the first member which leads to a generation of a galvanic corrosion.

In the present invention, the probe hole is not left at the friction stir zone, whereby there is avoided a problem of retaining excessive coating material on the thus obtained joint member of dissimilar metal members. In addition, the anxiety of the generation of the galvanic corrosion can also be effectively removed, and the quality of the joint region obtained by the friction stir welding is improved. Therefore, the soundness of the joint region can be advantageously enhanced.

### FEATURES OF THE INVENTION

The present invention is preferably practiced in at least the following features. In addition, the present invention may also be embodied with various changes, modifications and improvements that may occur to those skilled in the art, based on the following description

A method a defined in claim 1 is provided.

(2) The method according to the above feature (1), wherein the probe is pulled into the shoulder member, so that the tip of the probe is roughly flush with the shoulder surface when the shoulder surface comes into contact with the first member, and then the probe is projected out of the shoulder member and inserted into the first member.

(3) The method according to the above feature (1) or (2), wherein the probe is projected out of the shoulder member and inserted into the first member, before the shoulder surface comes into contact with the first member.

According to a method of the invention, a cylindrical burr-restraining member is brought into engagement with a peripheral portion of the shoulder member and is abutted with a surface of the first member, so that a generation of a burr may be restrained or prevented.

In this feature, the cylindrical burr-restraining member is used, so that there can be restrained or prevented the generation of the burr, which is formed of materials pushed out of the friction stir zone because of an insertion of the probe. Also, the material pushed out from the friction stir zone is pushed back to the friction stir zone, because the cylindrical burr-restraining member is abutted with the surface of the first member. According to this arrangement, there are effectively prevented oxides and other metal components from being flown to the surface of the first member by a plastic flow along an interface between the surface of the second member and the friction stir zone, whereby the oxides and other metal components are retained in the friction stir zone. Accordingly, there can be effectively removed an anxiety of causing the galvanic corrosion, which may be caused depending on kinds of the metal components moved to the surface of the second member along the interface.

(4) The method according to any one of the above features (1) - (3), wherein shoulder member is slightly moved back, during the friction stir welding operation.

(5) The method according to any one of the above features (1) - (4), wherein the burr-restraining member is pressed down to the first member with a predetermined pressure before the probe is inserted into the first member, and the pressure applied to the first member from the burr-restraining member is released after the probe hole is filled by the material.

According to a method of the invention, a distance between the tip of the probe and a surface of the second member is not less than 10 µm and is not more than 20 % of a thickness of the first member.

According to this feature there is regulated the distance between the tip of the probe projected out of the rotary tool and the surface of the second member, and the tip of the probe is positioned right above the surface of the second member. In this arrangement, only the first member is stirred, and there can be effectively made a newly-formed surface at the interface between the first and second members. Accordingly, there can be advantageously enhanced a strength of the junction between these members, and can be effectively prevented qualities of the joint region from being uneven.

(6) The method according to any one of the above features (1) - (5), wherein the shoulder member is moved in its axial direction by controlling a position of the shoulder member relative to a position of the first member, and a depth of a portion of the probe inserted into the first member is controlled based on a load applied to insert the probe.

In the method according to the above feature (6), the shoulder member is moved in its axial direction by controlling a position of the first member, and the depth of the portion of the probe inserted into the first member is controlled based on the load applied to insert the probe. In this case, the movements of the shoulder member and the probe in the axial direction can be effectively controlled. Therefore, there can be advantageously conducted the operation of joining together the members, even if the thickness of the first member is changed.

(7) The method according to any one of the above features (1) - (6), wherein the first member is formed of an aluminum material and the second member is formed of an iron material.

(8) The method according to any one of the above features (1) - (7), wherein the first member is an aluminum plate and the second member is a steel plate.

### BRIEF DESCRIPTION OF THE DRAWINGS

The above and other objects, features, advantages and technical and industrial significance of the present invention will be better understood by reading the following detailed description of presently preferred embodiments of the invention, when considered in connection with the accompanying drawings, in which:
Fig. 1 is a cross-sectional view showing a state of dissimilar metal members of a method not falling under the scope of the present invention before the metal members are joined together;
Fig. 2 is a cross-sectional view and its fragmentary enlarged view showing a step of a friction stir welding operation of a method not falling under the scope of the present invention;
Fig. 3 is a cross-sectional view showing a state of the dissimilar metal members of the method not falling under the scope of the present invention after a shoulder member and a probe are moved;
Fig. 4 is a cross-sectional view showing a state of the rotary tool removed from the first and second members, which are joined together by the method the present invention; and
Fig. 5 is a cross-sectional view corresponding to Fig. 2, explaining a method according to the present invention, wherein the rotary tool is different from that used in Fig. 2.
Fig. 6 is a view schematically showing one example of controlling the operations of the probe and the shoulder member of the rotary tool not falling under the scope of the present invention.

### DETAILED DESCRIPTION OF THE PREFERRED EMBODIMENTS

Hereinafter, there will be described in detail a preferred embodiment of the present invention by reference to the drawing.

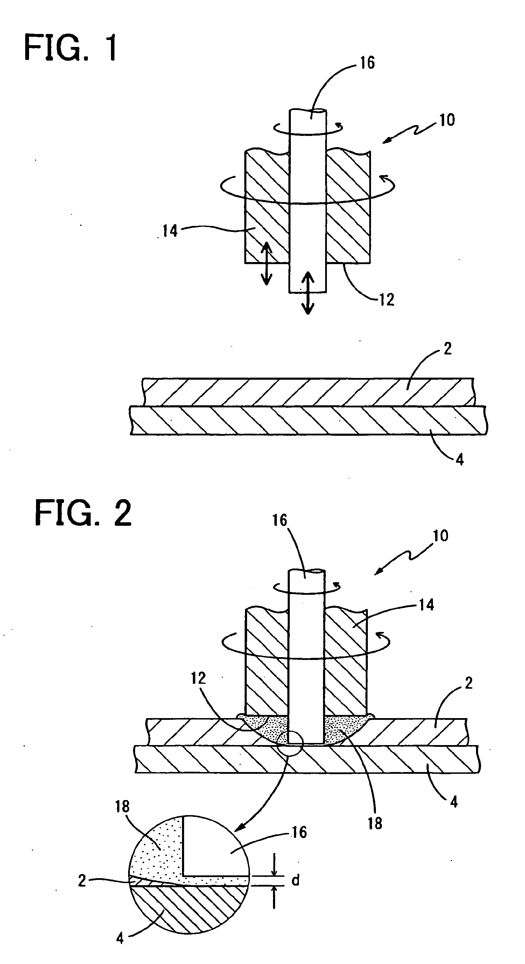

Referring first to Fig. 1, there is shown two metal plates 2, 4, which are formed of mutually different materials and have mutually different hardnesses, located by being superposed on each other, and which are to be joined together by a friction stir spot welding according to the present invention. These two metal plates 2, 4 are clamped by a known device and fixed in the positional relationship indicated above, so as to conduct the intended friction stir welding operation. On a back surface of the lower metal plate 4, there is located a backing jig, not shown, so that the two metal plates 2, 4 can be supported by the backing jig.

The upper metal plate 2 of the two metal plates 2, 4 is a first member formed of a relatively soft material among various metal materials. Examples of the material of the metal plate 2 include aluminum materials including aluminum alloys and copper materials including copper alloys. Meanwhile, the lower metal plate 4 is a second member formed of a hard metal material. Examples of the material of the metal plate 4 include iron or steel materials, which are made of an iron or an alloy thereof. Among the above-mentioned plates, there is preferably used the aluminum plate as the upper metal plate 2, and there is preferably used the iron or steel plate as the lower metal plate 4. The method of the present invention is advantageously adopted to join together the metal plates formed of the above-mentioned materials.

Over the upper one of the superposed two metal plates 2, 4, i.e., over the metal plate 2, there is positioned a known double-acting rotary tool 10. The rotary tool 10 comprises the followings: a shoulder member 14, which is a cylindrical main body of the rotary tool 10 and the bottom thereof is formed as a shoulder surface 12; and a rod (column)-shaped probe 16, which is inserted in a center hole of the shoulder member 14. The shoulder member 14 and the probe 16 can be rotated on their axes at a high speed, and can be independently moved in the axial direction. In this way, the shoulder member 14 and the probe 16 can be moved-based on various known double-acting structures. The shoulder member 14 and the probe 16 are made of a steel material. At least parts of the shoulder member 14 and the probe 16, which are to be caused to contact with, pushed to, or inserted into the upper metal plate 2, are formed of a material harder than the metal plate 2, so that the shoulder member 14 and the probe 16 are prevented from being worn off.

In joining together these two metal plates 2, 4 by the method of the friction stir welding, the rotary tool 10 is initially rotated at a high speed, while the probe 16 of the rotary tool is inserted into the upper metal plate 2, which is the first member formed of the soft metal. The shoulder member 14 and the probe 16, which are components of the rotary tool 10, may be rotated together or independently. The probe 16 is pulled into the shoulder member 14, so that the tip of the probe 16 is roughly flush with the shoulder surface 12, when the rotary tool 10, in particular, the shoulder surface 12 of the lower surface of the shoulder member 14 is lightly pushed to the surface of the metal plate 2. Accordingly, the shoulder surface 12 comes into contact with the metal plate 2, and the surface of the metal plate 2 is heated by the friction. Then, the probe 16 is projected out of the shoulder member 14 and inserted into the metal plate 2, in a way that the tip of the probe 16 reaches right above the lower metal plate 4, which is the second member formed of the hard metal. Fig. 2 shows a state that the probe 16 has reached right above the metal plate 4.

As described above, the tip of the probe 16 is flush with the shoulder surface 12 when the tip of the probe 16 is butted together with the surface of the metal plate 2, and then the friction stir welding operation is started. According to this arrangement, there can be enjoyed an advantage of effectively restraining or preventing a generation of a burr. However, the method is not limited to the above. Instead, there may be suitably adopted various known methods of operating a double-acting rotary tool. For instance, the probe 16 can be projected out of the shoulder member 14 and inserted into the metal plate 2, before the shoulder surface 12 comes into contact with the metal plate 2.

As described above, the shoulder surface 12 is in abutting contact with the surface of the metal plate, and the probe 16 is inserted into the metal plate while the rotary tool 10 is rotated at the high speed, whereby a stirring action is proceeded. As a result of the stirring action, there is formed the friction stir zone 18 under the shoulder surface 12 and around the probe 16 as shown in Fig. 2. The friction stir zone 18 is formed by stirring only the material of the upper metal plate 2. Subsequently, the friction stir zone 18 is caused to contact with the newly formed surface of the lower metal plate 4, whereby there is realized the friction stir welding of the two metal plates 2, 4.

In the friction stir welding operation, if the rotary tool 10, in particular the probe 16, is inserted too deep into the superposed parts of the two metal plates 2, 4, there is an anxiety that the tip of the probe 16 is caused to contact with the lower metal plate 4, which is the second member formed of the hard metal, so that the tip of the probe 16 would be worn off. On the other hand, if the depth of a portion of the probe inserted into the first member is too little, an interface between the two metal plates 2 and 4 would not be sufficiently stirred, so that it may be difficult to obtain a sufficient strength of a junction (joint strength). Therefore, it is in conformity with the present invention (see claim 1) that a distance "d" between the tip of the probe 16 and the surface of the lower metal plate 4 is generally not less than 10 µm and is not more than 20 % of a thickness of the metal plate 2.

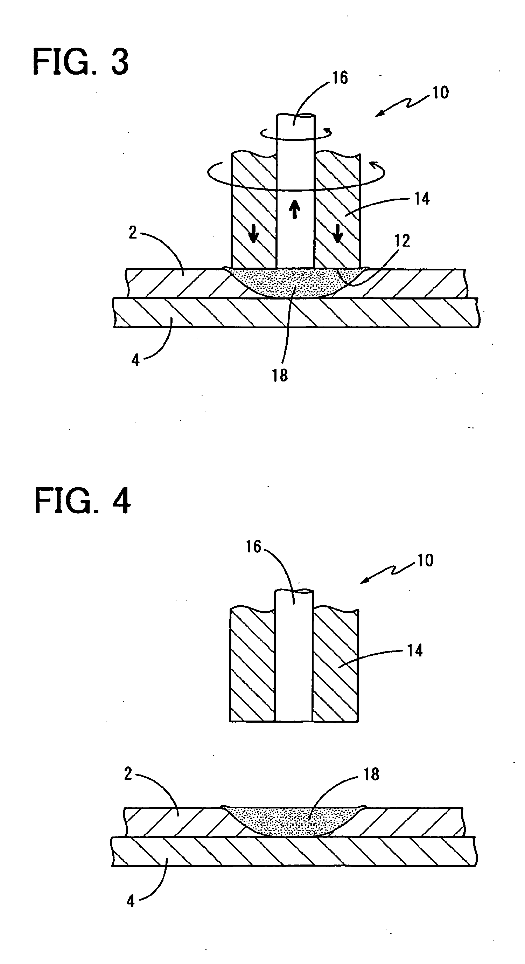

The rotary tool 10 is removed from the metal plate, after the friction stir welding, shown in Fig. 2, is completed. In this case, if the rotary tool 10 is simply removed from the friction stir zone 18, there remains a hole (probe hole), which is left by pulling out the probe 16. Because of the existence of the hole, there are inherently problems, such as the above-mentioned anxiety about causing the galvanic corrosion. For this reason, in the present invention, the probe 16, which is a component of the rotary tool 10, is pulled out from the friction stir zone 18 by being moved up in the axial direction, while the shoulder member 14 is moved down in the axial direction, as shown in Fig. 3. In this way the upper surface of a portion of the friction stir zone 18 is pressed down by the shoulder surface 12, whereby the hole formed by removing the probe 16 is filled by a material flown from another part of the friction stir zone 18, other than a part, from which the probe is removed.

Specific operations of filling up the hole formed by removing the probe 16 is not limited to the operation of lifting (pulling up) the probe 16, at the same time as bringing down (pressing down) the shoulder member 14. Instead, there may be suitably adopted other operations. For instance, there may be started bringing down the latter a little after starting the lifting of the former. Alternatively, there may be started bringing down the latter, after the former is completely lifted. In addition, the hole can be filled up by flowing the material from another part of the friction stir zone other than the part, from which the probe is removed, by applying an pressing operation to the friction stir zone by using a suitable pressure tool, after the rotary tool 10 is removed from the friction stir zone 18.

As described above, the rotary tool 10 is removed from the joint region (friction stir zone 18) of the two metal plates 2, 4, and the probe hole is filled up, whereby the hole formed by the probe 16 is substantially absent. In this case, the probe hole does not need to be disappeared such that only a trace of the probe hole is left, or even the trace cannot be recognized. Instead, the probe hole may still be existed as a hole having a certain depth, as long as a bottom of the probe hole, which is the deepest portion of the probe hole, is sufficiently covered by the material flown from another part of the friction stir zone 18, other than the part, from which the probe is removed.

In this way, the hole, which is made by removing the probe 16 from the friction stir zone 18, is filled by the material flown from another part of the friction stir zone 18 other than the part, from which the probe is removed. Accordingly, the oxides of the material of the lower metal plate 4 existed on the surface of the lower metal plate 4 and metal components of the metal plate 4 existed in the bottom of the probe hole are covered by the material of the friction stir zone 18, retained inside the friction stir zone, and are not exposed on the surface of the friction stir zone. Therefore, even if some water is existed on the surface of the friction stir zone 18, there can be completely avoided an anxiety of causing a galvanic corrosion phenomenon. Accordingly, there can be advantageously enhanced the soundness of the friction stir zone 18, which leads to an advantageously enhanced reliability of the friction stir zone 18.

In Fig. 4, the probe hole formed by removing the probe 16 is filled up, so that there is substantially no probe hole left on the surface of the friction stir zone 18. Accordingly, there is also effectively solved the problem of retaining excessive coating material, which contributes to improve the soundness of the joint region. In addition, there can also be advantageously improved the design of the surface of the joint region.

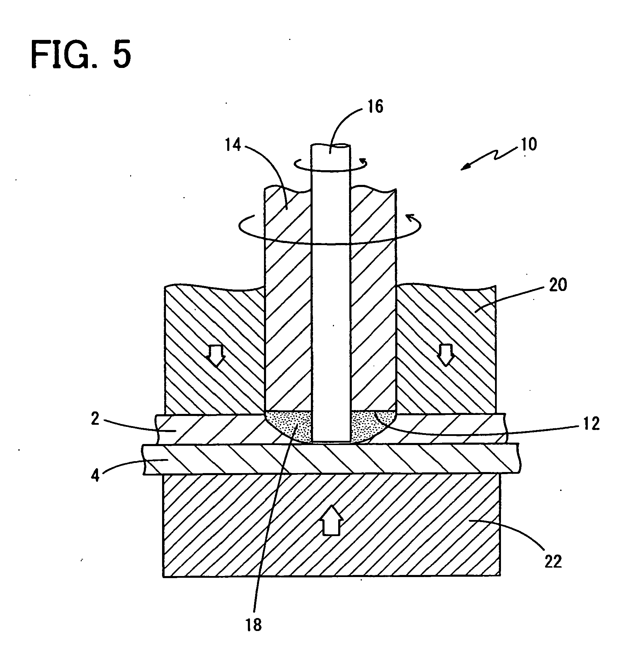

The present invention executed in the embodiment as shown in Fig. 5.

In a joining step of a method shown in Fig. 5 and according to the present invention (see claim 1), a cylindrical burr-retaining member 20 is brought into engagement with a peripheral portion of the shoulder member 14. By bringing down the cylindrical burr-retaining member 20, the superposed metal plates 2, 4, which are supported by the backing jig 22, can be pressed down.

In the friction stir welding operation, the burr-retaining member 20 is brought down at the same time as or before bringing down the shoulder member 14 and/or probe 16 of the rotary tool 10, whereby the surface of the upper metal plate 2 is pressed down. Subsequently, the rotary tool 10 is brought down, and the friction stir welding operation similar to the above-mentioned operation is conducted. In this case, the burr-restraining member restrains a generation of a burr from a material flown from the friction stir zone 18 formed by the stirring action by the shoulder surface 12 of the shoulder member 14 and the probe 16. In order to allow expansion of the volume of the friction stir zone, caused by restraining the flow of the material which may form the burr, the shoulder member 14 can be slightly moved back (lifted), during the friction stir welding operation. The burr-restraining member 20 is not rotated, and is pressed down with a predetermined pressure, e.g., by a spring, so that the burr is not generated between the burr restraining-member and the upper metal plate 2.

After the friction stir welding operation is completed, the hole formed by removing the probe 16 is filled by the material flown from another part of the friction stir zone other than the part, from which the probe is removed, by pulling up (lifting) the probe 16 and by pressing down the friction stir zone 18 by bringing down the shoulder member 14. Subsequently, the pressure applied to the metal plate 2 from the burr-restraining member 20 is released, and there is realized the intended friction stir welding between the metal plates 2 and 4.

As described above, there is provided the burr-restraining member 20 around the shoulder member 14 of the rotary tool 10, whereby there is restrained the generation of the burr around the peripheral portion of the tip of the shoulder member 14, i.e., the peripheral portion of the shoulder surface 12. According to the invention (see claim 1), there are prevented oxides and metal components of the metal plate 4, which are existed on the surface of the lower metal plate 4, from being brought up to the surface of the first member, along the interface between the friction stir zone 18 and the upper metal plate 2, by a plastic flow, whereby the oxides and other metal components are retained in the friction stir zone. Accordingly, there can be effectively removed an anxiety of causing the galvanic corrosion between the metal components of-the metal plate 4, existing at the interface between the metal plates 2 and 4, and the metal plate 2.

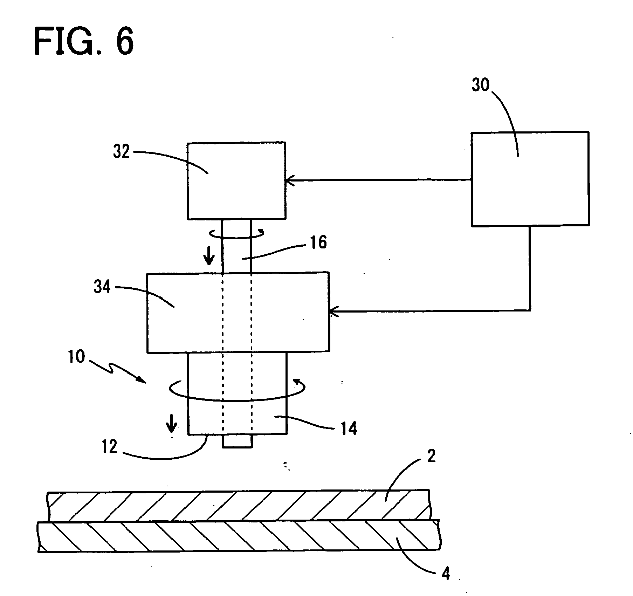

In the method of joining together the dissimilar metal plates, there is controlled the movement of a probe drive device 32 and/or a shoulder member drive device 34 by the control unit 30, as shown in Fig. 6, for instance. Accordingly, the rotation and the moving distance of the shoulder member 14 and the probe 16 are controlled, and the shoulder member 14 and the probe 16 are inserted into the superposed parts of the metal plates 2, 4, whereby the friction stir zone 18 can be advantageously formed on the metal plate 2. Each of the probe drive device 32 and the shoulder member drive device 34 may have functions of independently rotating and moving in its axial direction. Alternatively, only one of them, for example, the shoulder member drive device 34, may have the functions of rotating and moving in its axial direction, while the other of them, i.e., the probe drive device 32 has only a function of moving in its axial direction. In either case, the movements of the probe drive device 32 and the shoulder member drive device 34 are controlled by the control unit 30, based on a load applied to the probe 16 and the shoulder member 14 (shoulder surface 12). Also, the positions of the probe 16 and the shoulder member 14 are controlled by the control unit 30, based on the load applied to the probe 16 and the shoulder member 14.

In detail, positions of tips or ends of the shoulder member 14 and the probe 16 are controlled by the control unit 30, based on the followings: a load (pressure) applied from the upper metal plate 2 and the friction stir zone 18 to the shoulder surface 12 of the shoulder member 14; and a load (pressure) which is increased as the tip of the probe 16 inserted into the metal plate 2 gets closer to the surface of the lower metal plate 4. Meanwhile, positions of the shoulder member 14 and the probe 16 relative to the two metal plates 2, 4 are controlled by the control unit 30, by inputs of thicknesses etc., of the two metal members 2, 4 to an input device, which is not shown. Accordingly, the shoulder surface 12 of the shoulder member 14 is pressed to the surface of the upper metal plate 2, while the end of the probe 16 is moved and projected until the end of the probe 16 is positioned right above the lower metal plate 4. In this way, the friction stir zone 18 is advantageously formed within the metal plate 2.

By respectively controlling the moving distances of the probe 16 and the shoulder member 14 by the control unit 30, there can be assured a stable quality of the junction, even if the thicknesses of the metal plates 2, 4 to be joined together are varied. In particular, there can be accurately maintained a distance "d" between the tip of the probe 16 and an upper surface of the lower metal plate 4. Therefore, there can be wholly solved problems, which include the followings: a problem that the probe 16 comes into contact with the lower metal plate 4 caused by excessive insertion of the probe 16, which leads to a further problem of wearing the tip of the probe; and a problem of deteriorating the strength of the junction, because of an insufficient stirring of the interface between the metal plates 2 and 4, caused by an insufficient insertion of the probe.

Moving distances of both of the shoulder member 14 and the probe 16 in the axial direction may be controlled based on the positions of the member 14 and the probe 16, respectively, or on the loads applied to the member 14 and the probe 16, respectively. Alternatively, it is also possible to control the moving distance of one of the shoulder member 14 and the probe 16, e.g., the shoulder member 14, in the axial direction, by controlling the position of the shoulder member 14, while the moving distance of the other, i.e., the probe 16, is controlled by the load applied to the probe 16. In addition, it is also possible to control the moving distance of one of the shoulder member 14 and the probe 16, e.g., the shoulder member 14, in the axial direction, by controlling the position of the shoulder member 14 and the load applied to the member 14 in combination. It is especially desirable that the shoulder member 14 is moved in its axial direction based on the position of the shoulder member relative to the position of the upper metal plate 2, while a depth of a portion of the probe 16 inserted into the metal plate 2 is controlled by the load applied to the probe 16. According to this arrangement, the position of the probe 16 can be advantageously controlled, even if the thickness of the upper metal plate 2 is varied. In addition, it is also desirable that the movement of the shoulder member 14 in its axial direction is controlled based on the position of the shoulder member 14 at the beginning of the friction stir welding operation, and is controlled based on the load applied to the shoulder member 14 in the latter half of the operation.

There have been explained an embodiment (see Figure 5), which represent the present invention. It is to be understood that the present invention may be embodied with various changes, modifications and improvements that may occur to those skilled in the art, without departing from a scope of the invention defined in attached claims.

For example, in the above embodiment, there is adopted the friction stir spot welding, to which the present invention is advantageously adopted. Alternatively, the present invention can also be adopted to a method, in which the rotary tool 10 is moved to some extent relative to the metal plates 2, 4, while the friction stir welding operation is conducted.

In the above embodiment, there is explained the present invention by using an example in which the metal plates 2, 4 are used as the first and second members to be joined together. However, the shape of the members to be joined together is not limited to the plate shape. Instead, any members can be adopted to the present invention, as long as each of the superposed parts of the members, to which the friction stir welding operation such as the friction stir spot welding operation is conducted, has a shape similar to that of a plate or a face plate.

As the rotary tool 10, there can be suitably used various known double-acting rotary tools. A shape and a configuration of the probe 16 can also be suitably selected from various known shapes and configurations, such as an upright cylindrical shape, and a conical shape or a truncated cone-shape, of which an end portion is tapered off. In addition, there may be provided projections, protrusions, or grooves, on the surface of the probe. A shape of the shoulder surface 12 of the end portion of the shoulder member 14 is not particularly limited. Instead, there is adopted a known configuration, as the configuration of the shoulder surface 12, such as a flat surface or a concave surface, which surface is gradually curving inward.

### EXAMPLE according to the present invention:

Initially, there was prepared, as the first member 2 formed of a soft metal, a plate member formed of 6000 series aluminum material (AA6016 - T4) having a thickness of 1 mm. There was also prepared, as the second member 4 formed of a hard metal, a plate member formed of a steel material (SPCC) having a thickness of 1 mm.

Subsequently, the aluminum plate 2 and the steel plate 4 were superposed on each other. The friction stir welding operation according to the present invention was implemented from a side of the aluminum plate 2, by using the rotary tool 10, wherein a cylindrical steel clamp as the burr-restraining member 20 was inserted, so that the cylindrical steel clamp was brought into engagement with a peripheral portion of the rotary tool 10, as shown in Fig. 5.

In detail, the backing jig 22 was butted together with a back surface of the lower metal plate 4, and in this way, the plates 2, 4 were supported on each other. The cylindrical steel clamp which had an external diameter of 16 mm and an internal diameter of 10 mm was butted together with an upper surface of the aluminum plate 2 located on the steel plate 4, by using the double-acting rotary tool 10. Subsequently, the shoulder member 14 which had an external diameter of 10 mm and the probe 16 which had an external diameter of 4 mm were rotated in the same direction at a high speed, in a way that a lower surface of the shoulder surface is flushed with that of the probe 16. While the shoulder member 14 and the probe 16 were thus rotated, the lower surfaces of the shoulder member 14 and the probe 16 were butted together with the upper surface of the aluminum plate 2. Subsequently, the probe 16 was inserted into the aluminum plate 2, in a way that the tip of the probe reached right above the steel plate 4 and until the distance between the tip of the probe and the steel plate 4 became 100 µm. Then, the friction stir welding operation was performed, and there was formed a friction stir zone 18 as shown in Fig. 5.

After the friction stir welding operation, the probe 16 was removed from the friction stir zone 18, while the shoulder member 14 was moved down, whereby the friction stir zone 18 was pressed down. Subsequently, a hole formed by removing the probe 16 was filled with a material flown from the friction stir zone 18. Accordingly, there was obtained a joined member of the aluminum plate and the steel plate, without substantially leaving a hole formed by removing the probe on the surface of the friction stir zone 18.

In the above friction stir welding operation, the movement of the shoulder member 14 in the axial direction was controlled based on positional information of the surface of the aluminum plate 2 on the backing jig 22. Also, the distance between the tip of the probe 16 and the surface of the steel plate was controlled based on the load which was applied to insert the probe.

In the friction stir welding operation, a generation of a burr to a peripheral portion of the shoulder member 14 was restrained by the cylindrical steel clamp as the cylindrical burr-restraining member 20. Accordingly, there was able to be obtained the joined members joined by the friction stir welding, without exposing Fe-component on the surfaces thereof. In this case, heights of bumps on the surface of the joint region were not more than 0.05 mm. There was also recognized that the back surface of the joint region was almost flat and was sound. Moreover, there was conducted a tensile shear test, and the joint region exhibited a breaking strength of 2.5 KN, so that there was confirmed that there was an excellent joint strength.

## Claims

1. A method of joining together dissimilar metal members (2,4), by:
superposing a first member (2) formed of a soft metal and a second member (4) formed of a hard metal on each other, the first member (2) contacting the second member (4) on the upper surface;
performing a friction stir welding operation to join together the first and second members (2,4) by rotating a probe (16) located coaxially with and at an end of a shoulder member (14) of a rotary tool (10), which is to be rotated on its axis, while the probe (16) is inserted into the first member (2) in a way that a tip of the probe (16) reaches right above the first surface of the second member (4), thereby forming a friction stir zone (18), wherein the rotary tool (10) is a double-acting rotary tool, in which the probe (16) is provided separately from the shoulder member (14) and the probe (16) and the shoulder member (14) are independently movable in their axial direction; and **characterized by** :
removing the probe (16) from the friction stir zone (18) while a probe hole formed by the removal of the probe (16) is filled by a material flown from another part of the friction stir zone (18) other than a part from which the probe (16) is removed;
wherein a cylindrical burr-restraining member (20) is brought into engagement with a peripheral portion of the shoulder member (14) and is abutted with a surface of the first member (2), so that generation of a burr may be restrained or prevented; and
wherein a distance between the tip of the probe (16) and the upper surface of the second member (4) is not less than 10 µm and is not more than 20 % of a thickness of the first member (2).

2. The method according to Claim 1, wherein the probe (16) is pulled into the shoulder member (14) so that the tip of the probe (16) is roughly flush with the shoulder surface (12) when the shoulder surface (12) comes into contact with the first member (2), and then the probe (16) is projected out of the shoulder member (14) and inserted into the first member (2).

3. The method according to Claim 1, wherein the probe (16) is projected out of the shoulder member (14) and inserted into the first member (2), before the shoulder surface (12) comes into contact with the first member (2).

4. The method according to any one of Claims 1 - 3, wherein the shoulder member (14) is slightly moved back during the friction stir welding operation.

5. The method according to any one of Claims 1 - 4, wherein the burr-restraining member (20) is pressed down to the first member (2) with a predetermined pressure before the probe (16) is inserted into the first member (2), and the pressure applied to the first member (2) from the burr-restraining member (20) is released after the probe hole is filled by the material.

6. The method according to any one of Claims 1 - 5, wherein the shoulder member (14) is moved in its axial direction by controlling a position of the shoulder member (14) relative to a position of the first member (2), and a depth of a portion of the probe (16) inserted into the first member (2) is controlled based on a load applied to insert the probe (16).

7. The method according to any one of Claims 1 - 6, wherein the first member (2) is formed of an aluminum material and the second member (4) is formed of an iron material.

8. The method according to any one of Claims 1 - 7, wherein the first member (2) is an aluminum plate and the second member (4) is a steel plate.

## Patentansprüche

1. Ein Verfahren zum Verbinden unterschiedlicher metallischer Bauteile (2, 4) miteinander mittels:
Aufeinanderlegen eines ersten Bauteils (2), das aus einem weichen Metall ist und eines zweiten Bauteils (4), das aus einem harten Metall ist, wobei das erste Bauteil (2) das zweite Bauteil (4) an der oberen Oberfläche kontaktiert;
Durchführen eines Reibrührschweißvorgangs zur Verbindung der ersten und zweiten Bauteile (2, 4) durch Drehen eines Stifts (16), der koaxial zu und an einem Ende eines Schulterteils (14) eines Drehwerkzeugs (10) liegt, welches um seine Achse zu drehen ist, wobei der Stift (16) in das erste Bauteil (2) derart eingeführt wird, dass eine Spitze des Stifts (16) bis knapp oberhalb der ersten Oberfläche des zweiten Bauteils (4) reicht, so dass eine Reibrührzone (18) gebildet wird, wobei das Drehwerkzeug (10) ein doppelt wirkendes Drehwerkzeug ist, bei welchem der Stift (16) separat von dem Schulterteil (14) angeordnet ist und der Stift (16) und das Schulterteil (14) unabhängig voneinander in ihren Axialrichtungen bewegbar sind, **gekennzeichnet durch**:
Entfernen des Stifts (16) aus der Reibrührzone (18), wobei eine Stiftöffnung, die durch Entfernen des Stifts (16) gebildet wird, **durch** ein Material gefüllt wird, welches von einem anderen Teil der Reibrührzone (18) her anders als dem Teil einfließt, aus welchem der Stift (16) entfernt wurde;
wobei ein zylindrisches Gratbeschränkungsteil (20) in Anlage mit einem Umfangsabschnitt des Schulterteils (14) gebracht wird und an eine Oberfläche des ersten Bauteils (2) so angelegt wird, dass eine Graterzeugung beschränkbar oder verhinderbar ist; und
wobei ein Abstand zwischen der Spitze des Stifts (16) und der oberen Oberfläche des zweiten Bauteils (4) nicht geringer als 10 µm und nicht größer als 20% einer Dicke des ersten Bauteils (2) ist.

2. Das Verfahren nach Anspruch 1, wobei der Stift (16) in das Schulterteil (14) gezogen wird, so dass die Spitze des Stifts (16) annähernd in Fluchtung mit einer Schulterfläche (12) ist, wenn die Schulterfläche (12) in Kontakt mit dem ersten Bauteil (2) gelangt, wonach dann der Stift (16) aus dem Schulterteil (14) vorgeschoben und in das erste Bauteil (2) eingeführt wird.

3. Das Verfahren nach Anspruch 1, wobei der Stift (16) aus dem Schulterteil (14) vorgestreckt und in das erste Bauteil (2) eingeführt wird, bevor die Schulterfläche (12) in Kontakt mit dem ersten Bauteil (2) gelangt.

4. Das Verfahren nach einem der Ansprüche 1 bis 3, wobei das Schulterteil (14) während des Reibrührschweißvorgangs leicht zurück bewegt wird.

5. Das Verfahren nach einem der Ansprüche 1 bis 4, wobei das Gratbeschränkungsteil (20) mit einem bestimmten Druck nach unten auf das erste Bauteil (2) gedrückt wird, bevor der Stift (16) in das erste Bauteil (2) eingeführt wird und der auf das erste Bauteil (2) über das Gratbeschränkungsteil (20) aufgebrachte Druck abgenommen wird, nachdem die Stiftöffnung durch das Material gefüllt worden ist.

6. Das Verfahren nach einem der Ansprüche 1 bis 5, wobei das Schulterteil (14) in seiner Axialrichtung bewegt wird, indem eine Position des Schulterteils (14) relativ zu einer Position des ersten Bauteils (2) gesteuert wird und eine Tiefe eines Abschnitts des Stifts (16), der in das erste Bauteil (2) eingeführt ist, auf der Grundlage einer Last gesteuert wird, die aufgebracht wird, um den Stift (16) einzuführen.

7. Das Verfahren nach einem der Ansprüche 1 bis 6, wobei das erste Bauteil (2) aus einem Aluminiummaterial ist und das zweite Bauteil (4) aus einem Eisenmaterial ist.

8. Das Verfahren nach einem der Ansprüche 1 bis 7, wobei das erste Bauteil (2) eine Aluminiumplatte ist und das zweite Bauteil (4) eine Stahlplatte ist.

## Revendications

1. Procédé pour joindre l'un à l'autre des éléments métalliques dissimilaires (2, 4), comprenant les étapes consistant à :
superposer un premier élément (2) formé d'un métal mou et un second élément (4) formé d'un métal dur l'un sur l'autre, le premier élément (2) entrant en contact avec le second élément (4) sur la surface supérieure ;
réaliser une opération de soudage par friction-malaxage pour joindre l'un à l'autre les premier et second éléments (2, 4) en faisant tourner une sonde (16) située de façon coaxiale avec et à une extrémité d'un élément d'épaulement (14) d'un outil rotatif (10), qui doit être tourné sur son axe, alors que la sonde (16) est insérée dans le premier élément (2) de manière à ce qu'une pointe de la sonde (16) soit exactement au-dessus de la première surface du second élément (4), formant ainsi une zone de friction-malaxage (18), dans lequel l'outil rotatif (10) est un outil rotatif à double effet, dans lequel la sonde (16) est prévue séparément de l'élément d'épaulement (14) et la sonde (16) et l'élément d'épaulement (14) sont mobiles indépendamment dans leur direction axiale ; et
**caractérisé par** :
retirer la sonde (16) à partir de la zone de friction-malaxage (18) alors qu'un orifice de sonde formé par le retrait de la sonde (16) est rempli par un matériau s'étant écoulé à partir d'une autre partie de la zone de friction-malaxage (18) autre qu'une partie à partir de laquelle la sonde (16) est retirée ;
dans lequel un élément cylindrique anti-ébarbure (20) est mis en prise avec une partie périphérique de l'élément d'épaulement (14) et est contigu avec une surface du premier élément (2), de sorte que la génération d'une ébarbure puisse être limitée ou empêchée ; et
dans lequel une distance entre la pointe de la sonde (16) et la surface supérieure du second élément (4) n'est pas inférieure à 10 µm et n'est pas supérieure à 20 % d'une épaisseur du premier élément (2).

2. Procédé selon la revendication 1, dans lequel la sonde (16) est tirée dans l'élément d'épaulement (14) de sorte que la pointe de la sonde (16) soit approximativement au ras de la surface d'épaulement (12) lorsque la surface d'épaulement (12) entre en contact avec le premier élément (2), et puis la sonde (16) fait saillie hors de l'élément d'épaulement (14) et est insérée dans le premier élément (2).

3. Procédé selon la revendication 1, dans lequel la sonde (16) fait saillie hors de l'élément d'épaulement (14) et est insérée dans le premier élément (2), avant que la surface d'épaulement (12) entre en contact avec le premier élément (2).

4. Procédé selon l'une quelconque des revendications 1 à 3, dans lequel l'élément d'épaulement (14) est légèrement reculé au cours de l'opération de soudage par friction-malaxage.

5. Procédé selon l'une quelconque des revendications 1 à 4, dans lequel l'élément anti-ébarbure (20) est comprimé vers le bas sur le premier élément (2) avec une pression prédéterminée avant que la sonde (16) soit insérée dans le premier élément (2), et la pression appliquée sur le premier élément (2) à partir de l'élément anti-ébarbure (20) est relâchée après que l'orifice de sonde est rempli par le matériau.

6. Procédé selon l'une quelconque des revendications 1 à 5, dans lequel l'élément d'épaulement (14) est déplacé dans sa direction axiale en contrôlant une position de l'élément d'épaulement (14) par rapport à une position du premier élément (2), et une profondeur d'une partie de la sonde (16) insérée dans le premier élément (2) est contrôlée sur la base d'une charge appliquée pour insérer la sonde (16).

7. Procédé selon l'une quelconque des revendications 1 à 6, dans lequel le premier élément (2) est formé d'un matériau en aluminium et le second élément (4) est formé d'un matériau en fer.

8. Procédé selon l'une quelconque des revendications 1 à 7, dans lequel le premier élément (2) est une plaque d'aluminium et le second élément (4) est une plaque d'acier.
